# EUROPEAN PATENT SPECIFICATION

(11) **EP 1 352 561 B1**
(45) Date of publication and mention of the grant of the patent: **28.06.2006**
(21) Application number: 03252274.0
(22) Date of filing: 10.04.2003
(51) Int. Cl.: A01K 97/10

(54) **A leg securing device**
Vorrichtung zum Sichern eines stabförmigen Elements
Dispositif pour sécuriser un élément en forme de barre

(30) Priority: 11.04.2002 GB 0208396
(43) Date of publication of application: 15.10.2003
(73) Proprietor: FOX INTERNATIONAL GROUP LIMITED, Hainault, Essex IG6 3UT (GB)
(72) Inventor: Fox, Clifford Royston, Danbury, Essex CM3 4PG (GB); Cottis, Maxwell Stewart, Braintree, Essex CM7 9FD (GB)
(74) Representative: Crouch, David John

(56) References cited:
- US-A- 5 566 495
- US-A- 5 761 844
- US-A- 6 052 937
- US-A- 6 112 449
- US-A1- 2002 023 379
- US-B1- 6 185 855
- US-B1- 6 318 018

## Description

The present invention relates to a leg securing device for securing the leg of an article to the ground.

US 5,566,495 discloses a fishing rod holding and supporting device including a V-shaped stand member having a pointed tip, a hinge, and a T-shaped anchor, and a tubular receiver having an opening for slidably receiving a fishing rod. The device can be tightly fixed to the ground by the pointed tip or optionally to the deck by the T-shaped anchor.

A leg securing device for securing the leg of an article to the ground is especially desirable to secure a rod pod to the ground when such a pod is used to support a number of fishing rods. It is possible in certain conditions for the pod to be tipped over, especially when the rod angle is high or when a radio controlled boat is used to tow out the line to a location of considerable distance from the rod.

The present invention seeks to provide a remedy to such a problem.

Accordingly, the present invention is directed to a leg securing device for securing the leg of an article to the ground, the device comprising a foot portion which is anchorable to the ground and a sleeve portion which is pivotally attached to the foot portion so that such a leg can be received in the sleeve portion and can adopt any of a number of different angles relative to the foot portion, in which the foot portion is open in a region which is beyond the intended lower end of the sleeve portion, to enable such a leg to extend through the foot portion so that a lower end of such a leg can be pushed into soft ground with the foot portion resting on the surface of such ground.

One simple means by which the foot portion can be made anchorable to the ground is a peg-receiving aperture in the foot portion.

It is desirable for clamp means to be provided on the sleeve portion to clamp the leg therewithin.

One effective construction of clamp means comprises a cam held pivotally on the sleeve portion.

The foot portion may be open by virtue of a through-hole or by virtue of the foot portion having a framework structure, or by virtue of the foot portion having a recess in that region.

An example of a leg securing device made in accordance with the present invention will now be described with reference to the accompanying drawing, in which:
- Figures 1: to 3 show respective side views of the device with a portion thereof at different respective positions;
- Figure 4: shows a side view of the device in part section and with a part thereof in a fourth position;
- Figure 5: shows a view of the device from above; and
- Figure 6: shows a cross-sectional view of parts of the device shown in Figure 1 taken in the plane indicated by the line VI-VI therein.

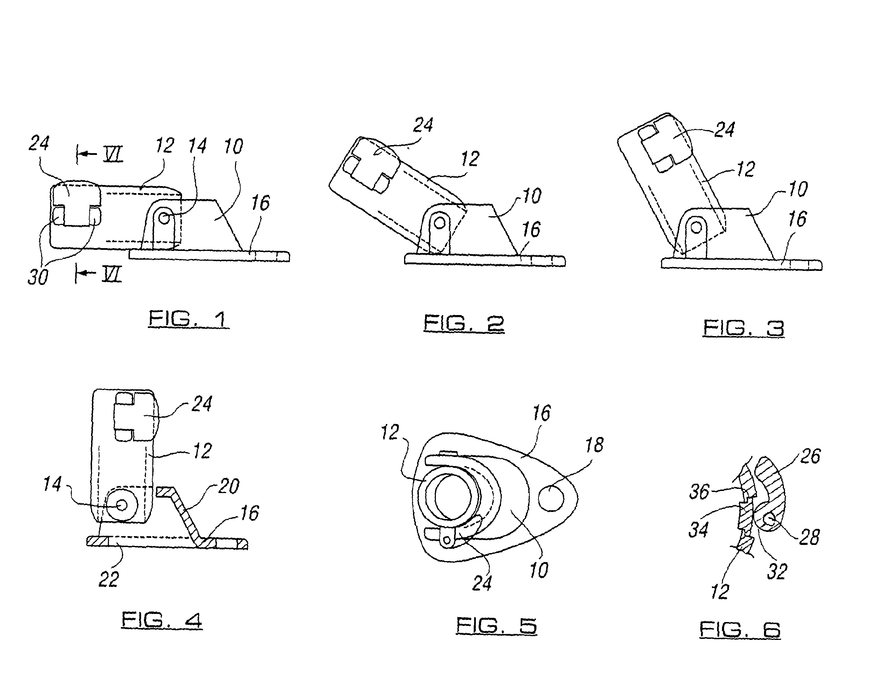

The device shown in Figures 1 to 6 comprises a foot portion 10 to which is pivotally attached an intended lower end of a sleeve portion 12 by means of trunnions 14.

The foot portion 10 comprises a somewhat triangularly shaped flat plate 16 in which is formed a peg-receiving aperture 18 through which a peg (not shown) can be inserted to secure the plate 16 to the ground at the surface thereof.

The foot portion 10 is also provided with a raised part 20 on which the trunnions 14 are mounted.

The plate 16 immediately below the trunnions 14, and hence below the intended lower end of the sleeve portion 12, is provided with a leg-accommodating aperture 22.

At an intended upper end of the sleeve 12, further from the end thereof at which it is pivoted at the trunnions 14, there is provided a clamp 24. This comprises a lever 26 which is pivotable about a pivot pin 28 which is held at its two ends respectively within protuberances 30 on the sleeve 12. The lever 26 is provided with a cam surface 32 adjacent to the pivot pin 28. This cam surface is immediately adjacent to an outside surface of a pad 34 which floats in an aperture 36 formed within the sleeve 12. When the lever 26 is manually rotated from an outward position to the illustrated closed position in which it rests against the sleeve 12, the cam surface 32 urges the pad 34 inwardly to clamp a leg which is received in the sleeve 12 in position therein.

When in use, the sleeve 12 can be threaded on to the leg of an article and slid upwardly therealong, the foot of the leg can be rested on the ground or, if the latter is soft, can be pushed into the ground, and the device can then be allowed to slide down the leg until the foot portion 10 thereof rests on the ground. The foot portion 10 can then be anchored to the ground by the insertion of a peg (not shown) through the peg-receiving aperture 18. The clamp 24 can then be operated to clamp the leg within the sleeve 12 whereby the leg is now firmly secured to the ground.

Numerous variations and modifications to the illustrated device can be made without taking it outside the scope of the present invention. To give one example only, a simpler clamping device to the one illustrated may be a simple screw engaging an internally screw-threaded hole formed in a wall of the sleeve 12.

## Claims

1. A leg securing device for securing the leg of an article to the ground, the device comprising a foot portion (10) which is anchorable to the ground and a sleeve portion (12) which is attached to the foot portion (10) and which receives a portion of such a leg when the device is in use, in which the sleeve portion (12) is pivotally attached to the foot portion (10) so that such a leg can adopt any of a number of different angles relative to the foot portion (10), **characterised in that** the foot portion (10) is open in a region which is beyond the intended lower end of the sleeve portion (12) to enable such a leg to extend through the foot portion (10) so that a lower end of such a leg can be pushed into soft ground with the foot portion (10) resting on the surface of the ground.

2. A leg securing device according to claim 1, **characterised in that** the foot portion (10) is anchorable to the ground by means of a peg-receiving aperture (18) in the foot portion (10).

3. A leg securing device according to claim 1 or claim 2, **characterised in that** clamp means (24) are provided on the sleeve portion (12) to clamp the leg therewithin.

4. A leg securing device according to claim 3 **characterised in that** the clamp means (24) comprises a cam (32) held pivotally on the sleeve portion (12).

5. A leg securing device according to any preceding claim, **characterised in that** the foot portion (10)is open by virtue of a through-hole (22) therein.

6. A leg securing device according to any one of claims 1 to 4, **characterised in that** the foot portion (10) is open by virtue of the foot portion (10) having a framework structure.

7. A leg securing device according to any one of claims 1 to 4, **characterised in that** the foot portion (10) is open by virtue of the foot portion (10) having a recess **in that** region.

## Patentansprüche

1. Beinbefestigungsvorrichtung zum Befestigen des Beins eines Gegenstandes am Boden, wobei die Vorrichtung einen Fußabschnitt (10), der am Boden verankerbar ist, und einen Hülsenabschnitt (12), der am Fußabschnitt (10) befestigt ist und einen Abschnitt eines solchen Beins aufnimmt, wenn die Vorrichtung in Gebrauch ist, umfasst, wobei der Hülsenabschnitt (12) an dem Fußabschnitt (10) schwenkbar befestigt ist, so dass ein Bein irgendeinen von mehreren Winkeln in Bezug auf den Fußabschnitt (10) annehmen kann, **dadurch gekennzeichnet, dass** der Fußabschnitt (10) in einem Bereich, der sich unter dem beabsichtigten unteren Ende des Hülsenabschnitts (10) befindet, offen ist, damit sich ein solches Bein durch den Fußabschnitt (10) erstrecken kann, so dass ein unteres Ende eines solchen Beins in einen weichen Boden geschoben werden kann, wobei der Fußabschnitt (10) auf der Oberfläche des Bodens aufliegt.

2. Beinbefestigungsvorrichtung nach Anspruch 1, **dadurch gekennzeichnet, dass** der Fußabschnitt (10) am Boden mittels einer Stiftaufnahmeöffnung (18) im Fußabschnitt (10) verankerbar ist.

3. Beinbefestigungsvorrichtung nach Anspruch 1 oder Anspruch 2, **dadurch gekennzeichnet, dass** an dem Hülsenabschnitt (12) Klemmmittel (24) vorgesehen sind, um das Bein darin festzuklemmen.

4. Beinbefestigungsvorrichtung nach Anspruch 3, **dadurch gekennzeichnet, dass** die Klemmmittel (24) einen Nocken (32) umfassen, der an dem Hülsenabschnitt (12) schwenkbar gehalten wird.

5. Beinbefestigungsvorrichtung nach einem vorhergehenden Anspruch, **dadurch gekennzeichnet, dass** der Fußabschnitt (10) aufgrund der Tatsache, dass er ein in ihm ausgebildetes Durchgangsloch (22) besitzt, offen ist.

6. Beinbefestigungsvorrichtung nach einem der Ansprüche 1 bis 4, **dadurch gekennzeichnet, dass** der Fußabschnitt (10) aufgrund der Tatsache, dass er eine Rahmenstruktur besitzt, offen ist.

7. Beinbefestigungsvorrichtung nach einem der Ansprüche 1 bis 4, **dadurch gekennzeichnet, dass** der Fußabschnitt (10) aufgrund der Tatsache, dass er in diesem Bereich eine Aussparung besitzt, offen ist.

## Revendications

1. Un dispositif de fixation de patte, pour fixer la patte d'un article au sol, le dispositif comprenant une partie formant pied (10), pouvant être ancrée au sol, et une partie formant douille (12), attachée à la partie formant pied (10) et recevant une partie d'une telle patte lorsque le dispositif est en utilisation, dans lequel la partie formant douille (12) est fixée à pivotement sur la partie formant pied (10), de manière qu'une telle patte puisse adopter l'un quelconque parmi une pluralité d'angles différents par rapport à la partie formant pied (10), **caractérisé en ce que** la partie formant pied (10) est ouverte dans une région située au-delà de l'extrémité intérieure escomptée de la partie formant douille (12), pour permettre à une telle patte de s'étendre à travers la partie formant pied (10), de manière qu'une extrémité inférieure d'une telle patte puisse être poussée dans un sol mou, alors que la partie formant pied (10) repose sur la surface du sol.

2. Un dispositif de fixation de patte selon la revendication 1, **caractérisé en ce que** la partie formant pied (10) est susceptible être ancrée au sol au moyen d'une ouverture de réception de téton (18), ménagée dans la partie formant pied (10).

3. Un dispositif de fixation de patte selon la revendication 1 ou la revendication 2, **caractérisé en ce que** des moyens de serrage (24) sont prévus sur la partie formant douille (12), pour y serrer la patte.

4. Un dispositif de fixation de patte selon la revendication 3, **caractérisé en ce que** les moyens de serrage (24) comprennent une came (32), maintenue à pivotement sur la partie formant douille (12).

5. Un dispositif de fixation de patte selon l'une quelconque des revendications précédentes, **caractérisé en ce que** la partie formant pied (10) est ouverte, en vertu du fait qu'un trou traversant (22) y est ménagé.

6. Un dispositif de fixation de patte selon l'une quelconque des revendications 1 à 4, **caractérisé en ce que** la partie formant pied (10) est ouverte, en vertu du fait que la partie formant pied (10) présente une structure en cadre.

7. Un dispositif de fixation de patte selon l'une quelconque des revendications 1 à 4, **caractérisé en ce que** la partie formant pied (10) est ouverte, en vertu du fait que la partie formant pied (10) présente dans cette région une cavité.
